(19) **Europäisches Patentamt**

**European Patent Office**

**Office européen des brevets**

(11) **EP 0 950 801 B1**

(12) **EUROPÄISCHE PATENTSCHRIFT**

(45) Veröffentlichungstag und Bekanntmachung des Hinweises auf die Patenterteilung:
**28.06.2006 Patentblatt 2006/26**

(51) Int Cl.:
*F01N 7/00* (2006.01)          *F01N 3/08* (2006.01)
*B01D 53/94* (2006.01)          *B01D 53/86* (2006.01)

(21) Anmeldenummer: **99106846.1**

(22) Anmeldetag: **07.04.1999**

(54) **Verfahren zur Überprüfung der Funktionstüchtigkeit eines Stickoxid-Speicherkatalysators**

Process for detecting the deterioration of a nitrogen oxide adsorbing catalyst

Procédé pour la détection de la détérioration d'un catalyseur adsorbant d'oxydes d'azote

(84) Benannte Vertragsstaaten:
**DE FR GB**

(30) Priorität: **14.04.1998 DE 19816175**

(43) Veröffentlichungstag der Anmeldung:
**20.10.1999 Patentblatt 1999/42**

(73) Patentinhaber: **Umicore AG & Co. KG**
**63457 Hanau-Wolfgang (DE)**

(72) Erfinder:
• **Strehlau, Wolfgang Dr.**
**63538 Grosskrotzenburg (DE)**

• **Mussmann, Lothar Dr.**
**63067 Offenbach (DE)**
• **Göbel, Ulrich Dr.**
**65795 Hattersheim (DE)**

(74) Vertreter: **Stellbrink, Axel et al**
**Vossius & Partner**
**Siebertstrasse 4**
**81675 München (DE)**

(56) Entgegenhaltungen:
**EP-A- 0 690 213**          **EP-A- 0 733 786**
**EP-A- 0 735 250**          **DE-A- 19 536 798**
**US-A- 5 693 877**

## Beschreibung

Die vorliegende Erfindung betrifft ein Verfahren zur Überprüfung der Funktionstüchtigkeit eines Stickoxid-Speicherkatalysators, welcher eine Stickoxid-Speicherfunktion und eine Sauerstoff-Speicherfunktion aufweist und mit zyklischem Wechsel der Luftzahlen des Abgases von Luftzahlen über 1 (Sorptionsphase) zur Speicherung der Stickoxide zu Luftzahlen unter 1 (Desorptionsphase) zur Desorption und Umsetzung der Stickoxide betrieben wird.

Stickoxid-Speicherkatalysatoren wurden speziell für die Abgasreinigung von mager betriebenen Brennkraftmaschinen entwickelt. Zur Klasse der mager betriebenen Brennkraftmaschinen gehören mager betriebene Benzinmotoren, sogenannte Magermotoren, und Dieselmotoren. Magermotoren, insbesondere mit Benzin-Direkteinspritzung, werden zunehmend im Kraftfahrzeugbau eingesetzt, da sie eine theoretische Kraftstoffersparnis von bis zu 25% gegenüber stöchiometrisch betriebenen Brennkraftmaschinen ermöglichen.

Stickoxid-Speicherkatalysatoren besitzen die Fähigkeit, in einem weiten Temperaturbereich Stickoxide unter oxidierenden Abgasbedingungen, das heißt im Magerbetrieb, zu speichern. Diese Betriebsphase wird daher im folgenden auch als Sorptionsphase bezeichnet.

Da die Speicherkapazität eines Speicherkatalysators begrenzt ist, muß er von Zeit zu Zeit regeneriert werden. Hierzu wird die Luftzahl des dem Motor zugeführten Luft/Kraftstoff-Gemisches und damit auch die Luftzahl des den Motor verlassenden Abgases für kurze Zeit auf Werte unter 1 abgesenkt. Dies wird auch als Anfettung des Luft/Kraftstoff-Gemisches oder des Abgases bezeichnet. Während dieser kurzen Betriebsphase liegen also im Abgas vor Eintritt in den Speicherkatalysator reduzierende Bedingungen vor.

Unter den reduzierenden Bedingungen während der Anfettungsphase werden die gespeicherten Stickoxide freigesetzt und am Speicherkatalysator unter gleichzeitiger Oxidation von Kohlenmonoxid, Kohlenwasserstoffen und Wasserstoff wie bei konventionellen Dreiwegkatalysatoren zu Stickstoff reduziert. Diese Betriebsphase des Speicherkatalysators wird im folgenden auch als Desorptions- und Umsetzungsphase bezeichnet. Bei korrekter Funktion des Gesamtsystems aus Speicherkatalysator, Sauerstoffsensoren und Motorelektronik liegen hinter dem Speicherkatalysator während der Desorptionsphase in etwa stöchiometrische Bedingungen vor, das heißt die vor dem Speicherkatalysator während der Desorptionsphase im Überschuß vorliegenden Kohlenwasserstoffe und Kohlenmonoxid werden am Speicherkatalysator durch die freigesetzten Stickoxide oxidiert.

Typischerweise beträgt die Dauer der Sorptionsphase etwa 30 bis 100 Sekunden. Die Dauer der Desorptionsphase ist wesentlich kürzer und liegt nur im Bereich von wenigen Sekunden (1 bis 10 Sekunden).

Funktionsweise und Zusammensetzung von Stickoxid-Speicherkatalysatoren sind zum Beispiel aus der EP 0 560 991 B1 bekannt. Als Speichermaterial enthalten diese Katalysatoren wenigstens eine Komponente aus der Gruppe der Alkalimetalle (Kalium, Natrium, Lithium, Cäsium), der Erdalkalimetalle (Barium, Kalzium) oder der Seltenerdmetalle (Lanthan, Yttrium). Als katalytisch aktives Element enthält der Speicherkatalysator Platin. Unter oxidierenden Abgasbedingungen, das heißt im Magerbetrieb, können die Speichermaterialien, die im Abgas enthaltenen Stickoxide in Form von Nitraten speichern. Hierzu ist es jedoch erforderlich, daß die Stickoxide, welche je nach Bauart des Motors und seiner Betriebsweise zu etwa 50 bis 90 % aus Stickstoffmonoxid bestehen, zunächst zu Stickstoffdioxid oxidiert werden. Dies geschieht an der Platinkomponente des Speicherkatalysators.

Neben den genannten Komponenten kann der Stickoxid-Speicherkatalysator noch Sauerstoff speichernde Komponenten enthalten. Er kann in diesem Fall neben der Stickoxidspeicherung auch Funktionen eines konventionellen Dreiwegkatalysators übernehmen. Als Sauerstoff speichernde Komponente wird zum größten Teil Ceroxid eingesetzt. Der Stickoxid-Speicherkatalysator besitzt dann neben seiner Stickoxid-Speicherfunktion auch eine Sauerstoff-Speicherfunktion, er ist somit bifunktional.

Ein wichtiges Problem bei modernen Abgasreinigungsverfahren ist die Überprüfung der korrekten Funktion der verwendeten Katalysatoren, um einen rechtzeitigen Austausch von nicht mehr funktionstüchtigen Katalysatoren zu ermöglichen. Dies gilt auch für Stickoxid-Speicherkatalysatoren, die zum einen durch den im Kraftstoff vorhandenen Schwefel und zum anderen durch thermische Überlastung in ihrer Stickoxid-Speicherfähigkeit geschädigt werden können. Während die Vergiftung durch Schwefel in der Regel durch Regeneration bei erhöhten Temperaturen wieder rückgängig gemacht werden kann, handelt es sich bei der thermischen Schädigung um einen irreversiblen Vorgang.

Bei bifunktionalen Speicherkatalysatoren können prinzipiell beide Speicherfunktionen durch Vergiftung und thermische Einflüsse geschädigt werden. Dabei bedingt die Schädigung der einen Funktion nicht notwendigerweise die Schädigung der anderen Funktion.

Da Stickoxide und Sauerstoff beides oxidierende Komponenten sind, lassen sich ihre Wirkungen nicht klar voneinander trennen, so daß es zu Fehldiagnosen bei der Prüfung des Katalysators kommen kann. Daher besteht ein dringendes Bedürfnis, die Funktionstüchtigkeit beider Speicherfunktionen unabhängig voneinander beurteilen zu können.

Die EP 0 690 213 A1 beschreibt eine Abgasreinigungseinrichtung, die in der Lage ist, den Grad der Schädigung eines Stickoxid-Speicherkatalysators oder eines Dreiwegkatalysators zu bestimmen. Hierzu ist ein Sauerstoffsensor, dessen Ausgangssignal proportional zum Luft/Kraftstoff-Verhältnis des Abgases ist, hinter dem Stickoxid-Speicherka-

**EP 0 950 801 B1**

talysator oder dem Dreiwegkatalysator angeordnet. Zur Bestimmung der Schädigung des Stickoxid-Speicherkatalysators oder des Dreiwegkatalysators wird das Luft/Kraftstoff-Verhältnis des Kraftstoffgemisches zeitweilig von mager nach fett oder von fett nach mager geändert. Während der Betriebszeit mit geändertem Luft/Kraftstoff-Verhältnis wird die schon vorliegende Schädigung der Katalysatoren aus dem Spitzenwert des Ausgangssignals des Sauerstoffsensors ermittelt.

Ein Verfahren zur Überprüfung eines bifunktionalen Stickoxid-Speicherkatalysators ist aus der EP 0 735 250 A bekannt.

Es ist die Aufgabe der vorliegenden Erfindung ein Verfahren zur Überprüfung der Funktionsfähigkeit von bifunktionalen Speicherkatalysatoren zur Verfügung zu stellen, welches es erlaubt, die beiden Speicherfunktionen getrennt zu überprüfen.

Diese Aufgabe wird gelöst durch ein Verfahren zur Überprüfung der Funktionstüchigkeit eines Stickoxid-Speicherkatalysators, welcher eine Stickoxid-Speicherfunktion und eine Sauerstoff-Speicherfunktion aufweist und mit zyklischem Wechsel der Luftzahlen des Abgases von mager nach fett und zurück betrieben wird, wobei während der Magerphase die Stickoxide gespeichert und während der Fettphase die Stickoxide desorbiert und umgesetzt werden. Das Verfahren ist dadurch gekennzeichnet, daß zur Überprüfung der Funktionstüchtigkeit des Speicherkatalysators die Luftzahl des Abgases von mager nach Fett umgeschaltet wird und die Fettphase über die für die vollständige Desorption der Stickoxide benötigte Zeit bis wenigstens zum Durchbruch des fetten Abgases durch den Katalysator verlängert und der zwischen dem ersten Umschalten bis zum Durchbruch des fetten Abgases sich ergebende Zeitversatz $\Delta t_1$ sowie der nach erneutem Umschalten des Abgases von fett nach mager sich ergebende Zeitversatz $\Delta t_2$ zwischen dem zweiten Umschalten und dem Durchbruch des Sauerstoffs durch den Katalysator gemessen werden und die Zeitdifferenzen $\Delta t_1$ und $\Delta t_2$ zur getrennten Beurteilung der Sauerstoff-Speicherfunktion und der Stickoxid-Speicherfunktion des Katalysators herangezogen werden.

Erfindungsgemäß werden also die beiden Speicherfunktionen des bifunktionalen Katalysators durch Messen der Zeitdifferenzen zwischen den Änderungen der Luftzahlen vor und hinter dem Speicherkatalysator überprüft. Während die Zeitdifferenz bei Änderung der Luftzahl von mager nach fett durch die gemeinsame Wirkung von Stickoxid- und Sauerstoff-Speicherfunktion des Katalysators verursacht wird, ist die Zeitdifferenz bei Änderung der Luftzahl von fett nach mager nur von der Sauerstoffspeicherfähigkeit des Katalysators abhängig.

Nach dem Umschalten der Luftzahl von mager nach fett werden die Stickoxide durch die reduktiven Komponenten des Abgases (Kohlenwasserstoffe und Kohlenmonoxid) desorbiert und am Speicherkatalysator umgesetzt. Außerdem werden die reduktiven Komponenten des Abgases.unter Verbrauch des gespeicherten Sauerstoffs oxidiert. Stickoxidspeicher und Sauerstoffspeicher werden somit im fetten Abgas entleert.

Die Luftzahl des Abgases hinter dem Katalysator folgt der Luftzahländerung vor dem Katalysator nicht spontan, sondern nur mit einer gewissen Verzögerung und bleibt, solange die Speicher nicht entleert sind, noch im mageren Bereich, so daß eine hinter dem Katalysator angeordnete Sprung-Lambda-Sonde noch eine magere Abgaszusammensetzung melden würde. Erst wenn Stickoxidspeicher und Sauerstoffspeicher entleert sind, werden keine Kohlenwasserstoffe und Kohlenmonoxid mehr umgesetzt. Es kommt dann zum Durchbruch dieser Stoffe durch den Katalysator und die Luftzahl des Abgases hinter dem Katalysator wechselt in den fetten Bereich. Dieser Zeitpunkt kann in einfacher Weise mit einer sogenannten Sprung-Lambda-Sonde ermittelt werden, deren Signal in einem engen Luftzahlintervall um 1 herum von mager nach fett oder umgekehrt umschlägt. Aber auch die Verwendung einer linearen Lambda-Sonde zur Bestimmung dieses Zeitpunktes ist möglich. Die Funktionsweise der für das Verfahren geeigneten Lambda-Sonden werden im Kraftfahrttechnischen Taschenbuch von Bosch, VDI-Verlag, 20. Auflage von 1995, Seiten 490 bis 492, beschrieben.

Die gespeicherten Stickoxide werden in der Regel schneller freigesetzt als der auf dem Katalysator gespeicherte Sauerstoff durch die Kohlenwasserstoffe im fetten Abgas verbraucht, beziehungsweise entleert, wird. Außerdem sind diese Desorptionsgeschwindigkeiten noch von dem Grad der Anfettung des Abgases sowie der Abgastemperatur abhängig.

Je stärker das Abgas angefettet wird, um so schneller werden Stickoxidspeicher und Sauerstoffspeicher entleert. Gleiches gilt für eine Erhöhung der Abgastemperatur. Für das erfindungsgemäße Verfahren kann die Luftzahl während der Fettphase in einem Intervall zwischen 0,7 und 0,99 festgelegt werden.

Wird eine Luftzahl knapp unter 1 gewählt, so geht die Entleerung der Speicher langsamer vor sich als bei einem niedrigeren Wert der Luftzahl. Dies ermöglicht eine höhere Genauigkeit der Zeitmessung. Der Durchbruch der reduktiven Komponenten durch den Katalysator tritt in diesem Fall erst nach vollständiger Entleerung von Stickoxidspeicher und Sauerstoffspeicher ein, so daß die zu messende Zeitdifferenz $\Delta t_1$ die Summe beider Speicherkapazitäten wiedergibt. Bei stärkerer Anfettung kommt es nach der schnellen Entleerung des Stickoxidspeichers zu einem Überangebot von reduktiven Komponenten, die von dem gespeicherten Sauerstoff nicht schnell genug umgesetzt werden können. Es kommt zu einem Durchbruch der reduktiven Komponenten bevor der Sauerstoffspeicher vollständig entleert ist. In diesem Fall setzt sich die zu messende Zeitdifferenz aus der Speicherkapazität für die Stickoxide und einem Teil der Speicherkapazität für Sauerstoff zusammen.

Bevorzugt wird die Prüfung des Katalysators bei einem bestimmten Betriebszustand des Motors, das heißt bei definierter Abgastemperatur und Luftzahl während der Fettphase vorgenommen. Für die Dauer der Fettphase wird ein fester Wert gewählt, welcher um den Faktor 1,0 bis 10 größer als die bei einem frischen Speicherkatalysator zu messende Zeitdauer bis zum ersten Durchbruch des fetten Abgases durch den Katalysator bei den gewählten Betriebsbedingungen ist. Der definierte Betriebszustand während der Katalysatorprüfung garantiert, daß immer der gleiche Bruchteil der Sauerstoff-Speicherkapazität des Katalysators in die Prüfung mit einbezogen wird.

Bevorzugt wird der oben genannte Faktor so gewählt, daß der während dieser Zeit von den reduktiven Komponenten entleerte Teil des Sauerstoffspeichers gerade dem Wert entspricht, der für die einwandfreie Prüfung des Katalysators erforderlich ist.

Der Entleerung des Stickoxid- und Sauerstoffspeichers beim Umschalten der Luftzahl von mager nach fett steht eine entsprechende Auffüllung des Sauerstoffspeichers nach Beendigung der Fettphase gegenüber. Wie schon beim Umschalten von mager nach fett so folgt auch nach Umschalten von fett nach mager die Luftzahl hinter dem Katalysator nicht spontan der Luftzahl vor dem Katalysator. Die Luftzahl bleibt zunächst im fetten Bereich, da der Sauerstoffüberschuß des mageren Abgases jetzt erst zur Auffüllung des Sauerstoffspeichers verwendet wird. Eine hinter dem Katalysator angeordnete Sprung-Lambda-Sonde würde also weiterhin ein fettes Abgas anzeigen. Erst nach Auffüllung des Sauerstoffspeichers kommt es zu einem merklichen Durchbruch des Sauerstoffs durch den Katalysator und damit im Falle einer Messung mit einer Sprungsonde zu einer detektierbaren Änderung der Abgaszusammensetzung. Die meßbare Zeitdifferenz $\Delta t_2$ zwischen dem Beendigen der Fettphase und dem Durchbruch des Sauerstoffs durch den Katalysator ist ein Maß für den in die Prüfung mit einbezogenen Teil des Sauerstoffspeichers. Sinkt die Sauerstoff-Speicherkapazität des Katalysators durch Vergiftung mit Schwefel oder durch thermische Schädigung unter diesen Betrag, so macht sich dies durch eine Verringerung von $\Delta t_2$ bemerkbar und es kann gegebenenfalls ein Signal zum Austausch des Katalysators gesetzt werden.

Zur getrennten Beurteilung der Stickoxidspeicherfunktion und der Sauerstoffspeicherfunktion können für $\Delta t_1$ und $\Delta t_2$ folgende Beziehungen aufgestellt werden:

$$\Delta t_1 = a \cdot K_{NOx} + b \cdot K_{O2} \qquad (i)$$

Hierin bezeichnen a und b Proportionalitätskonstanten. $K_{NOx}$ beziehungsweise $K_{O2}$ bezeichnen die Speicherkapazitäten des Katalysators für Stickoxide und Sauerstoff.

Beziehung (i) spiegelt die Feststellung wieder, daß $\Delta t_1$ durch beide Speicherkapazitäten bedingt wird. Es ist klar ersichtlich, das die Wirkung der beiden Speicherkapazitäten nicht durch Messung von $\Delta t_1$ allein voneinander getrennt werden können. Deshalb wird als weitere Messung die Bestimmung von $\Delta t_2$ herangezogen. $\Delta t_2$ ist nur abhängig von der Sauerstoffspeicherkapazität:

$$\Delta t_2 = c \cdot K_{O2} \qquad (ii)$$

Die Proportionalitätskonstante b beschreibt die Entleerungsgeschwindigkeit des Sauerstoffspeichers, während die Konstante c ein Maß für die Geschwindigkeit ist, mit der der Sauerstoffspeicher wieder aufgefüllt wird. Aus den Beziehungen (i) und (ii) ergibt sich für die Kapazität des Stickoxidspeichers:

$$a \cdot K_{NOx} = \Delta t_1 + \frac{b}{c} \cdot \Delta t_2 \qquad (iii)$$

Das Verhältnis b/c in Gleichung (iii) ist vom Material und den gewählten Betriebsbedingungen des Motors während der Katalysatorprüfung abhängig. Es kann in Vorversuchen ermittelt werden. Gleichungen (ii) und (iii) ermöglichen also auch bei gleichzeitiger Anwesenheit einer Stickoxidspeicherfunktion und einer Sauerstoffspeicherfunktion im Speicherkatalysator die getrennte Beurteilung beider Funktionen durch Messung von $\Delta t_1$ und $\Delta t_2$.

Die Zeitdifferenzen $\Delta t_1$ und $\Delta t_2$ können auf verschiedenartige Weise bestimmt werden. So besteht die Möglichkeit, die Zeitdifferenzen $\Delta t_1$ und $\Delta t_2$ aus der Differenz des jeweiligen Zeitpunktes der Umschaltung der Luftzahl durch die Motorsteuerung und dem jeweiligen Zeitpunkt der Änderung der Luftzahl hinter dem Katalysator, gemessen mit einer Sprung-Lambda-Sonde oder einer linearen Lambda-Sonde, zu ermitteln. Bei langen Abgasleitungen zwischen Motor und Speicherkatalysator müssen die so bestimmten Zeitdifferenzen gegebenenfalls um die Laufzeiten des Abgases zwischen Motor und Katalysator korrigiert werden. Alternativ hierzu können zur Bestimmung der Zeitdifferenzen die Änderungen der Luftzahl vor und hinter dem Katalysator mit je einer Sprung-Lamda-Sonde detektiert werden.

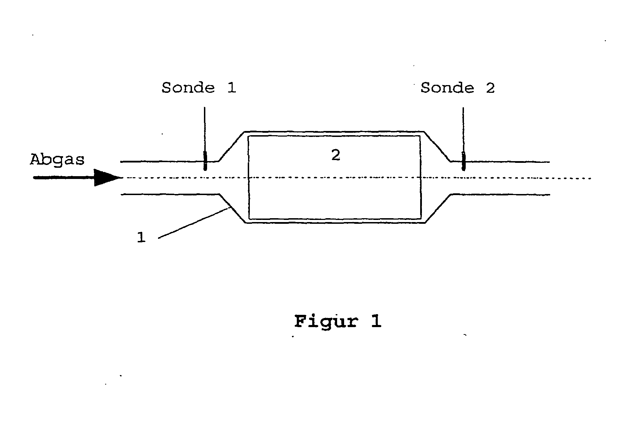

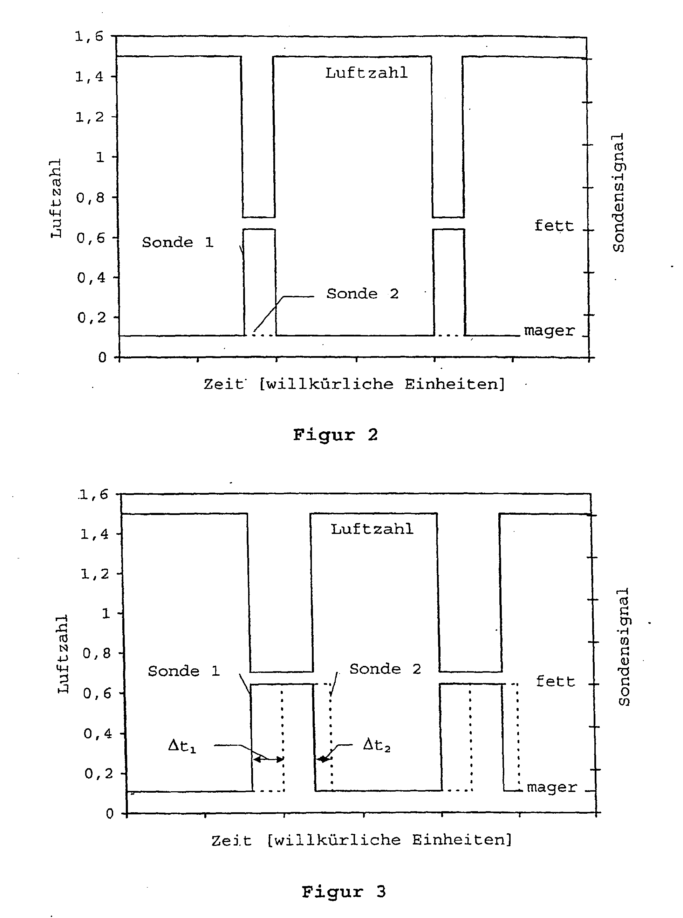

Die Erfindung wird nun an Hand der Figuren 1 und 3 näher erläutert. Es zeigen:

Figur 1: Abgasreinigungsanlage mit einer Sprung-Lambda-Sonde vor und einer Sprung-Lambda-Sonde hinter dem Speicherkatalysator

Figur 2: Zeitlicher Verlauf der aufgeprägten Luftzahl $\lambda$ vor dem Speicherkatalysator und der Signalverlauf der beiden Sprung-Lambda-Sonden beim Normalbetrieb des Magermotors

Figur 3: Zeitlicher Verlauf der aufgeprägten Luftzahl $\lambda$ vor dem Speicherkatalysator und der Signalverlauf der beiden Sprung-Lambda-Sonden während der Überprüfung der Katalysatorfunktion

Figur 1 zeigt den Aufbau einer Abgasreinigungsanlage (1) wie er für die Durchführung des erfindungsgemäßen Verfahrens geeignet ist. (2) bezeichnet den Speicherkatalysator, dessen Funktion regelmäßige überprüft werden soll. Er ist in ein Gehäuse der Abgasreinigungsanlage eingebaut. In Strömungsrichtung des Abgases vor dem Katalysator ist eine Sauerstoffsonde (Sonde 1) in die Abgasleitung eingeführt. Hinter dem Stickoxid-Speicherkatalysator befindet sich eine zweite Sauerstoffsonde (Sonde 2). Bei beiden Sonden handelt es sich in diesem Beispiel um Sprung-Lambda-Sonden.

Figur 2 zeigt den Verlauf der durch die Motorelektronik aufgeprägten Luftzahl vor dem Speicherkatalysator sowie die Signale der Sonde 1 vor dem Katalysator und der Sonde 2 hinter dem Katalysator. Das Signal der Sonde 1 folgt der durch die Motorelektronik vorgegebenen Änderung der Luftzahl, während das Signal der Sonde 2 wesentlich durch die Speichereigenschaften des Katalysators beeinflußt wird.

Die Luftzahl hat während der überwiegenden Dauer des Betriebs einen Wert über 1 (hier 1,5). In dieser mageren Betriebsphase werden Stickoxide durch die Stickoxid-Speicherfunktion des Katalysators und Sauerstoff durch die Sauerstoff-Speicherfunktion des Katalysators auf dem Katalysator gespeichert.

Nach einer gewissen Zeit ist der Stickoxidspeicher des Katalysators vollgelaufen und er muß regeneriert werden. Hierzu wird die Luftzahl von der Motorsteuerung auf einen Wert unter 1 (hier 0,7) abgesenkt. Demgemäß ändert sich das Sondensignal vor dem Katalysator entsprechend. Durch das nun reduzierend wirkende Abgas werden die auf dem Speicherkatalysator gespeicherten Stickoxide zersetzt und desorbiert sowie der auf dem Katalysator gespeicherte Sauerstoff zur Oxidation der reduktiven Bestandteile des Abgases verbraucht. Bei optimaler Justierung dieses Vorganges ist das den Katalysator verlassende Abgas nahezu stöchiometrisch zusammengesetzt. Sonde 2 zeigt daher keine Änderung seines Sondensignals.

Während des normalen Betriebs des Speicherkatalysators wird die Absenkung der Luftzahl von der Motorelektronik beendet, wenn der Speicherkatalysator vollständig regeneriert ist. Das Sondensignal von Sonde 1 folgt dieser Änderung entsprechend, während die Sonde 2 im Idealfall während des gesamten Betriebs keine Änderung zeigt. Tatsächlich kann es jedoch zu geringfügigen Ausschlägen des Signals von Sonde 2 kommen, wenn der Desorptionsvorgang länger als nötig fortgesetzt wird. Diese Verhältnisse sollten jedoch beim normalen Betrieb des Speicherkatalysators soweit als möglich vermieden werden, da ein zu langer Desorptionsvorgang zu einem erhöhten Kraftstoffverbrauch führt.

Von Zeit zu Zeit muß die Funktionstüchtigkeit des Speicherkatalysators durch die Motorelektronik überprüft werden. Die erfindungsgemäße Vorgehensweise ist in Figur 3 dargestellt. Während der Überprüfung des Speicherkatalysators wird die Luftzahl länger als für den reinen Desorptionsvorgang nötig auf einem Wert unter 1 gehalten. Die Fettphase hat eine feste Zeitdauer, die größer ist als die bei einem frischen Katalysator bis zum Durchbruch der reduktiven Komponenten benötigten Zeit. Dann tritt während der Fettphase ein Durchbruch der reduktiven Komponenten durch den Katalysator auf, der zu einer entsprechenden Signaländerung von Sonde 2 führt.

Die Zeitdauer $\Delta t_1$, die bis zum Registrieren der reduktiven Komponenten durch Sonde 2 vergeht, ist durch die Menge der auf dem Speicherkatalysator gespeicherten Stickoxide und den Anteil des in die Prüfung mit einbezogenen Sauerstoffspeichers gegeben.

Nach Abschluß der Fettphase wird die Luftzahl wieder auf einen Wert über 1 angehoben. Die Sonde 2 zeigt jedoch noch für eine gewisse Zeit $\Delta t_2$ eine unterstöchiometrische Luftzahl hinter dem Katalysator an, da der Sauerstoff des mageren Abgases zunächst für die Auffüllung des Sauerstoffspeichers des Katalysators verwendet wird, bevor er ungehindert den Katalysator passieren kann und das Signal von Sonde 2 in seinen Ausgangszustand zurückkehrt.

Wie diese Überlegungen zeigen ist die Zeitdauer $\Delta t_2$ nur von der Sauerstoffspeicherfähigkeit des Katalysators abhängig. Durch Messen dieser Zeit kann also ein Urteil über den Zustand der Sauerstoff-Speicherfunktion des Katalysators gemacht werden. Je geringer $\Delta t_2$ ist, um so geringer ist die noch verbliebene Sauerstoffspeicherfähigkeit des Katalysators.

Zur Verbesserung der Meßergebnisse wird die Prüfphase über mehrere Stickoxid-Speicherzyklen wiederholt, bevor die Motorelektronik in den normalen Speicherbetrieb zurückschaltet.

**Patentansprüche**

1. Verfahren zur Überprüfung der Funktionstüchigkeit eines Stickoxid-Speicherkatalysators, welcher eine Stickoxid-Speicherfunktion und eine Sauerstoff-Speicherfunktion aufweist und mit zyklischem Wechsel der Luftzahlen des Abgases von mager nach fett betrieben wird, wobei während der Magerphase die Stickoxide gespeichert und während der Fettphase die Stickoxide desorbiert und umgesetzt werden,
   **dadurch gekennzeichnet,**
   **daß** zur Überprüfung der Funktionstüchtigkeit des Speicherkatalysators die Luftzahl des Abgases von mager nach fett umgeschaltet wird und die Fettphase über die für die vollständige Desorption der Stickoxide benötigte Zeit bis wenigstens zum Durchbruch des fetten Abgases durch den Katalysator verlängert und der zwischen dem ersten Umschalten bis zum Durchbruch des fetten Abgases sich ergebende Zeitversatz $\Delta t_1$ sowie der nach erneutem Umschalten des Abgases von fett nach mager sich ergebende Zeitversatz $\Delta t_2$ zwischen dem zweiten Umschalten und dem Durchbruch des Sauerstoffs durch den Katalysator gemessen werden und die Zeitdifferenzen $\Delta t_1$ und $\Delta t_2$ zur getrennten Beurteilung der Sauerstoff-Speicherfunktion und der Stickoxid-Speicherfunktion des Katalysators herangezogen werden,

2. Verfahren nach Anspruch 1,
   **dadurch gekennzeichnet,**
   **daß** die Fettphase um den Faktor 1,0 bis 10 über die Zeitdauer bis zum ersten Durchbruch des fetten Abgases beim frischen Katalysator verlängert ist.

3. Verfahren nach Anspruch 2,
   **dadurch gekennzeichnet,**
   **daß** die Luftzahl während der Fettphase zwischen 0,99 und 0,7 eingestellt wird.

4. Verfahren nach Anspruch 3,
   **dadurch gekennzeichnet,**
   **daß** die Zeitdifferenzen $\Delta t_1$ und $\Delta t_2$ aus der Differenz des jeweiligen Zeitpunktes der Umschaltung der Luftzahl durch die Motorsteuerung und dem jeweiligen Zeitpunkt der Änderung der Luftzahl hinter dem Katalysator, gemessen mit einer Sprung-Lambda-Sonde oder einer linearen Lambda-Sonde, ermittelt werden.

5. Verfahren nach Anspruch 3,
   **dadurch gekennzeichnet,**
   **daß** zur Bestimmung der Zeitdifferenzen $\Delta t_1$ und $\Delta t_2$ die Änderung der Luftzahl vor und hinter dem Katalysator mit je einer Sprung-Lambda-Sonde detektiert wird.

**Claims**

1. A process for evaluating performance deterioration of a nitrogen oxide storage catalyst which has a nitrogen oxide storage function and an oxygen storage function and is operated with cyclic alternation of the air/fuel ratio in the exhaust gas from lean to rich, wherein the nitrogen oxides are stored during the lean phase and the nitrogen oxides are desorbed and converted during the rich phase,
   **characterised in that**,
   to check the proper performance of the storage catalyst, the air/fuel ratio of the exhaust gas is switched from lean to rich and the rich phase is extended beyond the time required for complete desorption of the nitrogen oxides until at least the rich exhaust gas breaks through the catalyst and the time interval $\Delta t_1$ produced between the first switch-over until breakthrough of the rich exhaust gas and, after again switching from rich to lean-running, the time interval $\Delta t_2$ produced between the second switch-over until breakthrough of oxygen through the catalyst are measured and the time differences $\Delta t_1$ and $\Delta t_2$ are used for separate assessment of the oxygen storage function and the nitrogen oxide storage function of the catalyst.

2. A process according to Claim 1,
   **characterised in that**

the rich phase is extended by a factor of 1.0 to 10 as compared with the time interval until the first breakthrough of the rich exhaust gas through a fresh catalyst,

3. A process according to Claim 2,
   **characterised in that**
   the air/fuel ratio during the rich
   phase is adjusted to between 0.99 and 0.7.

4. A process according to Claim 3,
   **characterised in that**
   the time differences $\Delta t_1$ and $\Delta t_2$ are determined from the difference between the respective time at which the engine control system switches the air/fuel ratio and the respective time at which the air/fuel ratio changes downstream of the catalyst, measured with a dual lambda sensor or a linear lambda sensor.

5. A process according to Claim 3,
   **characterised in that**,
   in order to determine the time differences $\Delta t_1$ and $\Delta t_2$, the changes in air/fuel ratio upstream and downstream of the catalyst are each detected with a dual lambda sensor.

**Revendications**

1. Procédé de vérification du bon fonctionnement d'un catalyseur accumulateur d'oxyde d'azote, qui a une fonction d'accumulation de l'oxyde d'azote et une fonction d'accumulation de l'oxygène et fonctionne avec une alternance cyclique des indices d'air des gaz d'échappement entre pauvre et riche, les oxydes d'azote étant accumulés pendant la phase pauvre et désorbés et convertis pendant la phase riche,
   **caractérisé en ce que**
   pour vérifier le bon fonctionnement du catalyseur accumulateur, on commute l'indice d'air des gaz d'échappement de pauvre à riche et on prolonge la phase riche au-delà du temps nécessaire à la désorption complète des oxydes d'azote au moins jusqu'à la percée des gaz d'échappement riches à travers le catalyseur, et on mesure le décalage dans le temps $\Delta t_1$, apparaissant entre la première commutation et la percée des gaz d'échappement riches, ainsi que le décalage dans le temps $\Delta t_2$, après une nouvelle commutation des gaz d'échappement de riches à pauvres, apparaissant entre la deuxième commutation et la percée de l'oxygène à travers le catalyseur, on en déduit les différences de temps $\Delta t_1$ et $\Delta t_2$ pour évaluer séparément la fonction d'accumulation de l'oxygène et la fonction d'accumulation de l'oxyde d'azote du catalyseur.

2. Procédé selon la revendication 1,
   **caractérisé en ce que**
   pour un catalyseur frais on prolonge la phase riche d'un facteur de 1,0 à 10 au-delà de la durée jusqu'à la première percée des gaz d'échappement riches.

3. Procédé selon la revendication 2,
   **caractérisé en ce que**
   l'indice d'air est ajusté entre 0,99 et 0,7 pendant la phase riche.

4. Procédé selon la revendication 3,
   **caractérisé en ce qu'**
   on mesure les différences de temps $\Delta t_1$ et $\Delta t_2$ avec une sonde lambda à saut de tension ou une sonde lambda linéaire, à partir de la différence entre le moment de commutation de l'indice d'air par la commande du moteur et le moment du changement de l'indice d'air en aval du catalyseur.

5. Procédé selon la revendication 3,
   **caractérisé en ce que**
   pour déterminer les différences de temps $\Delta t_1$ et $\Delta t_2$, on détecte le changement de l'indice d'air en amont et en aval du catalyseur avec respectivement une sonde lambda à saut de tension

Figur 1

**Figur 2**

**Figur 3**